# EUROPEAN PATENT APPLICATION

(11) **EP 3 474 218 A1**
(43) Date of publication of application: **24.04.2019**
(21) Application number: 18758328.1
(22) Date of filing: 22.02.2018
(51) Int. Cl.: G06Q 40/06

(54) **INSURANCE MANAGEMENT SYSTEM AND METHOD**

(30) Priority: 27.02.2017 US 201762463841 P
(71) Applicant: I Peace, Inc., Palo Alto, CA 94303 (US); FANUC CORPORATION, Oshino-mura Minamitsuru-gun Yamanashi 401-0597 (JP)
(72) Inventor: TANABE, Koji, Palo Alto California 94303 (US); SUGAYA, Tsunesaburo, Palo Alto California 94303 (US); INABA, Kiyonori, Minamitsuru-gun Yamanashi 401-0597 (JP)
(74) Representative: MacLean, Martin Robert
(86) International application number: PCT/JP2018/006511
(87) International publication number: WO 2018/155570

(57) **Abstract**

An insurance management system comprising an insurance management server, the insurance management server having a receiving unit that receives payment of a prescribed amount over a prescribed time period from a user, a preparation request transmitter that transmits a preparation request by the client for specific cells to a cell management server that manages preparation of the specific cells, when accumulation of payments by the user received at the receiving unit satisfies a first condition, and a usage request transmitter that transmits a usage request by the client for the specific cells to the cell management server, when accumulation of payments received at the receiving unit satisfies a second condition which is a condition of a larger amount or a longer period than the first condition.

## Description

### TECHNICAL FIELD

The present invention relates to an insurance management system and to a method for the same.

### BACKGROUND ART

In recent years, in the field of regenerative medicine, iPS cell stock projects have been developed in which blood is harvested from donors that are homozygotic for healthy HLA (Human Leukocyte Antigen) and, at the Center for iPS Cell Research at Kyoto University, iPS cells (induced pluripotent stem cells) are created and stored.

PTL 1 discloses a system that calculates reserved funds for an insurance contract.

### [CITATION LIST]

### [PATENT LITERATURE]

PTL 1: Japanese Unexamined Patent Publication No. 2003-157358

### SUMMARY OF INVENTION

### [TECHNICAL PROBLEM]

iPS cells for clinical use must be prepared and stored in a cleanroom kept in a state of very high cleanliness. Therefore, high costs are incurred for preparation of iPS cells. There is demand for a system configuration in which costs are reliably collected to allow preparation of iPS cells in a planned manner. One method that may be imagined is to reserve a fund, as with the insurance contract described in PTL 1, for example. However, simply making periodic payments of the amounts necessary for preparation of iPS cells cannot meet ever diversifying needs. For example, it is only by preparing iPS cells and examining the prepared iPS cells that it can be determined whether the potential for actual use of the iPS cells is high. Therefore, a demand exists for constructing a flexible insurance management system suited for a variety of cases.

### [SOLUTION TO PROBLEM]

The insurance management system according to one aspect of the invention is an insurance management system comprising an insurance management server, the insurance management server having a receiving unit that receives payment of a prescribed amount over a prescribed time period from a user, which may be a client or associated person, a preparation request transmitter that transmits a preparation request by the client for specific cells to a cell management server that manages preparation of the specific cells, when accumulation of payments by the user received at the receiving unit satisfies a first condition, and a usage request transmitter that transmits a usage request by the client for the specific cells to the cell management server, when accumulation of payments received at the receiving unit satisfies a second condition which is a condition of a larger amount or a longer period than the first condition.

The cell management server has a receiver that receives a preparation request or usage request from the insurance management server, a determining unit that determines the starting date for preparation of the specific cells of the client in response to receipt of a preparation request at the receiver, a managing unit that manages preparation of the specific cells of the client on the preparation starting date, and an outputter that outputs permission for use of the specific cells of the client that have been created, in response to receipt of a usage request at the receiver.

The insurance management server and the cell management server may be separate servers, or they may be implemented in a single server.

The specific cells are, for example, iPS cells or cells derived from iPS cells (hereunder, iPS cells and cells derived from iPS cells will be collectively referred to as "iPS cells"). In this case, the cell management server may be referred to as an "iPS management server" that manages preparation of iPS cells.

According to this aspect, where usage of iPS cells is permitted when the second condition is satisfied, the preparation of the iPS cells is initiated when the first condition, of a smaller amount or a shorter period than the second condition, is satisfied. This can guarantee collection of the cost necessary for preparation of the iPS cells, when the iPS cells are to be used. Also, by preparing the iPS cells in advance even if the cost necessary for preparation of the iPS cells has not been accumulated, it is possible to provide a flexible insurance system that is adaptable to different inspection results for the prepared iPS cells.

### [ADVANTAGEOUS EFFECTS OF INVENTION]

According to the invention it is possible to provide a flexible insurance system that allows costs required for preparation of specific cells such as iPS cells to be collected, and that is adaptable to different cases.

### BRIEF DESCRIPTION OF DRAWINGS

Fig. 1 is a general schematic drawing that includes an insurance management system.
Fig. 2 is a block diagram showing an example of the configurations of a client terminal, insurance management server and iPS management server.
Fig. 3 is a diagram showing an example of the processing sequence upon applying for preparation of iPS cells.
Fig. 4 is a diagram showing an example of data used in the processing sequence of Fig. 3.
Fig. 5 is a diagram showing an example of a processing sequence in which the inspection results for somatic cells have been acquired by an insurance management server.
Fig. 6 is a diagram showing an example of data used in the processing sequence of Fig. 5.
Fig. 7 is a diagram showing an example of a processing sequence after the first condition has been satisfied.
Fig. 8 is a diagram showing an example of data used in the processing sequence of Fig. 7.
Fig. 9 is a diagram showing an example of a processing sequence after the second condition has been satisfied.
Fig. 10 is a block diagram showing an example of the configurations of a client terminal, insurance management server and iPS management server.
Fig. 11 is a diagram showing an example of a processing sequence after matching of inspection results for a client has been determined.
Fig. 12 is a diagram showing another example of a processing sequence after matching of inspection results for a client has been determined.

### DESCRIPTION OF EMBODIMENTS

Preferred embodiments of the present invention will now be described with reference to the accompanying drawings. In the drawings, elements indicated by like reference numerals have identical or similar constructions.

### [First embodiment]

### [Overview]

The insurance management system of this embodiment comprises an insurance management server that reserves funds related to preparation costs for iPS cells.

High costs are incurred for preparation of iPS cells. In addition, time is also required for preparation of iPS cells. Furthermore, it is impossible to predict in advance when a situation will be faced in which the iPS cells are needed (for example, a situation in which regenerative medicine using iPS cells will be needed). When a situation in which iPS cells are needed is actually faced, there is a risk that the funds for the cost for preparation of the iPS cells may not exist, or that the equipment for preparation of the iPS cells may not be available. For this embodiment, therefore, reservation of funds for the costs is carried out by an insurance management server, against a future situation 10 or 20 years later, for example, in which the iPS cells may be needed. When the reserve fund has been filled, a mode allowing usage of the iPS cells becomes operative. The amount and period for the reserved funds may be varied according to the medical record of the client that wishes to utilize the iPS cells, or inspection results for the cells from which the iPS cells are to be prepared. Preparation of the iPS cells may be initiated at a stage before the reserved fund has been filled, i.e. when the reserved fund has reached a prescribed condition at less than the full amount. The amount and period for the reserved funds may also be subsequently varied according to inspection results for the prepared iPS cells. The reserved funds may be accumulated by the actual client who wishes to prepare and use the iPS cells, or they may be accumulated by a person associated with the client who wishes to prepare and use the iPS cells. For example, reservation of the funds may be by a parent or grandparent, for preparation and use of the iPS cells by a child or grandchild.

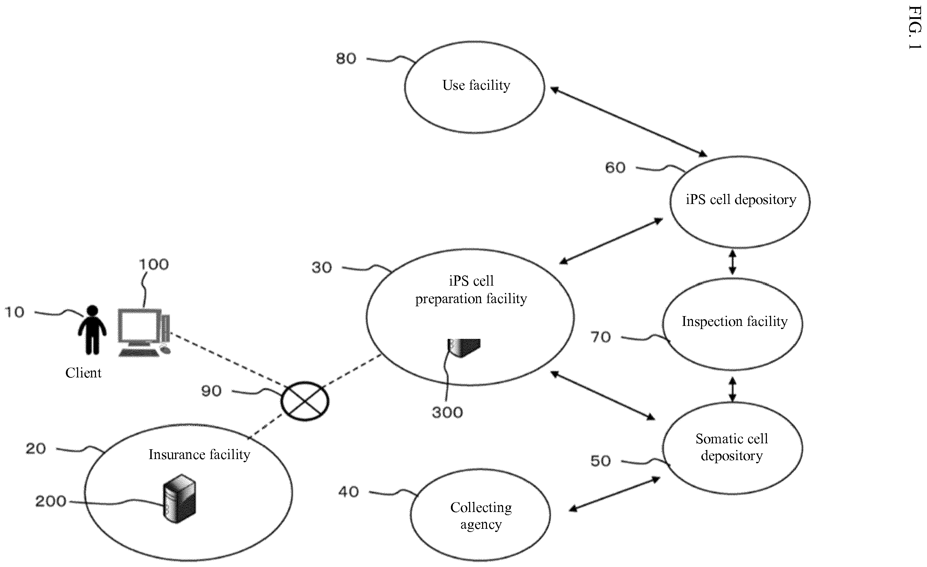

Fig. 1 is a schematic diagram as an overview including an insurance management system according to this embodiment.

The relationship between reserving insurance funds and iPS cell banking for this embodiment will be explained first. The mode described here is merely a general example and is not intended to be restrictive. In the example shown in Fig. 1, a client 10 submits an application for preparation of iPS cells that may potentially be used in the future, and payments of prescribed amounts are made over a prescribed time period. When the cumulative payments satisfy a first condition (for example, when the amount of the reserved funds has reached half of the estimated funding amount), preparation of the iPS cells is carried out.

When further funds are reserved and the accumulation of payments satisfies a second condition of a larger amount or a longer period than the first condition (for example, when the amount of reserved funds has reached the estimated funding amount), usage of the prepared iPS cells is permitted. An example of a mode of reserving funds will now be used to explain processing in a case where accumulation of the monthly reserved amount by an individual client satisfies the first condition, or a case where it satisfies the second condition. However, there is no limitation to this mode. For example, it may be a mode in which premiums for several individuals are pooled as with mutual aid premiums, and preparation of iPS cells is carried out when the first condition is satisfied (for example, when payment has been made over a period until a prescribed age is reached).

The client 10 submits an application for preparation of iPS cells to the insurance management server 200, using a client terminal 100. The client 10 may submit the application for preparation using various application means such as telephone, facsimile, electronic mail or sending of an application form. The client terminal 100 is then notified by the insurance management server 200 regarding the funding amount or funding period for allowing use. The client terminal 100 determines the funding amount or funding period based on instructions from the client 10, and transmits the determined results to the insurance management server 200. Funding is then carried out according to the determined results. The mode may be such that the application for preparation of iPS cells made by the client 10 is transmitted from the insurance management server 200 to the iPS management server 300, or is transmitted from the client terminal 100 to the iPS management server 300.

The iPS management server 300 schedules for harvesting of somatic cells such as blood cells or skin cells, which are to serve as material for preparation of the iPS cells of the client 10, at a collecting facility 40.

The collecting facility 40 harvests the somatic cells of the client 10 in accordance with the schedule determined by the iPS management server 300. The collecting facility 40 might include a hospital where somatic cells can be harvested from the client 10, a blood donation center, or other facilities. The somatic cells harvested at the collecting facility 40, or the blood used for harvesting of somatic cells (hereunder referred to simply as "somatic cells") are brought to a somatic cell depository 50 in a suitable temperature-controlled state. The somatic cells that have been brought to the somatic cell depository 50 are inspected at an inspection facility 70 during the prescribed period. The inspection facility 70 may include a medical institution, research institution or other institution capable of inspecting the somatic cells. The inspection results obtained at the inspection facility 70 are sent to the insurance management server 200 and iPS management server 300.

The insurance management server 200 notifies the client 10 regarding optionally variable conditions for the reserve funding, based on the inspection results for the somatic cells (that is, the inspection results for either or both the somatic cells and the blood used for harvesting of the somatic cells). The insurance management server 200 changes the conditions for reserve funding of the client 10, based on the response by the client 10. For example, when it is assessed that the iPS cells are highly usable as a result of inspection of the somatic cells, changes may be made such as increasing the funding amount above the previously set amount, or shortening the funding period. For example, causative genes of diseases such as Parkinson's disease, Alzheimer's or rheumatism are constantly being identified, which have future potential of being curable by iPS cell therapy. A client 10 having such a causative gene is notified of a high potential for future use, and may also be notified of conditions for reserve funding corresponding to the high use potential.

The insurance management server 200 manages the reserved funds of the client 10. The reserved funding is carried out for a long-term period of 10 or 20 years, for example. When the accumulated amount satisfies a first condition (for example, when the accumulated amount has reached half of the estimated funding amount), the insurance management server 200 transmits the preparation request for iPS cells of the client 10 to the iPS management server 300. The iPS management server 300 that has received the preparation request conducts scheduling for the somatic cells of the client 10 that are in frozen storage at the somatic cell depository 50, to be brought to the iPS cell preparation facility 30.

At the iPS cell preparation facility 30, preparation of the iPS cells of the client 10 is initiated using the carried somatic cells of the client 10. The iPS cell preparation facility 30 is preferably a specialized facility capable of preparing iPS cells, but this is not limitative, and the concept includes a medical institution, research institution or other preparation facility capable of preparing iPS cells. Here, a specialized facility capable of preparing iPS cells means a facility that can carry out at least one and preferably two or more operations selected from among inducing, culturing, storing and recording of iPS cells, in a closed space without human intervention. The example given for the iPS management server 300 of this embodiment is a mode in which it is installed at an iPS cell preparation facility 30, but it does not necessarily need to be installed at an iPS cell preparation facility 30. The iPS cell preparation facility 30 prepares iPS cells by introducing an inducing factor into somatic harvested somatic cells, while conducting quality testing on the prepared iPS cells (differentiation-inducing potency inspection, gene mutation inspection and fungus/bacterium/virus inspection), to prepare standard-conforming iPS cells. The iPS cells prepared in this manner are brought to an iPS cell depository 60 in a proper temperature-controlled state, and stored. This embodiment is explained using preparation of iPS cells as an example, but cells derived from iPS cells or other specific cells, may be prepared at the iPS cell preparation facility 30.

The iPS cells or the culture solution used for preparation of the iPS cells, that have been brought to the iPS cell depository 60, are inspected at the inspection facility 70 during a prescribed time period. The inspection results obtained at the inspection facility 70 are sent to the insurance management server 200 and iPS management server 300. The insurance management server 200 notifies the client 10 regarding optional variable conditions for the reserve funding, based on the inspection results for the iPS cells. The conditions for reserve funding are changed based on the response by the client 10. For example, when it is assessed that the iPS cells are highly usable as a result of inspect of the iPS cells, changes may be made such as increasing the funding amount above the previously set amount, or shortening the funding period.

The insurance management server 200 subsequently manages reserve funding for the client 10. When the accumulated amount satisfies a second condition (for example, when the accumulated amount has reached the estimated funding amount), the insurance management server 200 transmits the usage request for iPS cells of the client 10 to the iPS management server 300. The iPS management server 300 that has received the usage request conducts scheduling for the iPS cells of the client 10 that are stored at the iPS cell depository 60, to be brought to a usage facility 80. The usage facility 80 prepares cornea, cardiac muscle, liver and other transplant tissue cells by inducing differentiation of the provided iPS cells, and utilizes the prepared tissue cells for regenerative medicine or clinical research on patients, including the client 10.

This mode will now be explained using an example in which the amount and period of reserve funding differ depending on the actual potential for use of the iPS cells. The example shown in Fig. 1 was explained using a mode where each of the facilities are separately provided, but multiple functions may instead be carried out at the same facility. For example, the inspection facility 70 and the usage facility 80 may be the same facility, or the somatic cell depository 50 and iPS cell depository 60 may be the same depository.

### [Block diagram]

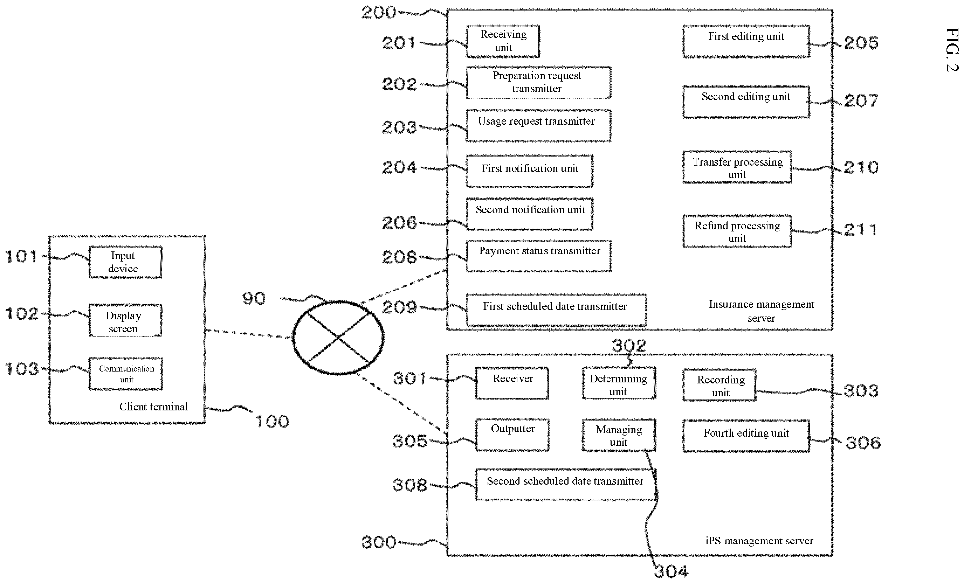

Fig. 2 is a block diagram showing an example of the configurations of a client terminal 100, insurance management server 200 and iPS management server 300.

### [Configuration of client terminal]

The client terminal 100 is a terminal used by the client 10, and it has an input device 101, a display screen 102 and a communication unit 103. The client terminal 100 is an electronic device such as a personal computer, smartphone or tablet terminal, for example.

The input device 101 allows input of instructions by the client 10. For example, it may receive input from the client 10 as instructions regarding the amount of reserve funding.

The display screen 102 is a display that displays various items of information. A touch panel display having the input device 101 and display screen 102 integrated may also be used. For example, the display screen 102 displays the variable funding amount and funding period, which are transmitted from the insurance management server 200.

The communication unit 103 is a communication interface that communicates with other devices through a network 90. For example, the communication unit 103 may communicate with the insurance management server 200 and iPS management server.

### [Configuration of insurance management server]

The insurance management server 200 has a receiving unit 201, a preparation request transmitter 202, a usage request transmitter 203, a first notification unit 204, a first editing unit 205, a second notification unit 206, a second editing unit 207, a payment status transmitter 208, a first scheduled date transmitter 209, a transfer processing unit 210 and a refund processing unit 211.

The insurance management server 200 used may be an information processor comprising a CPU (Central Processing Unit), RAM (Random Access Memory) and flash memory or HDD (Hard Disc Drive) (not shown). A program stored in the flash memory or HDD is temporarily read out into RAM and the CPU executes the program that has been read into RAM, thereby allowing the CPU of the insurance management server 200 to function as the parts of the insurance management server 200 shown in Fig. 2. Incidentally, at least some of the parts of the insurance management server 200 shown in Fig. 2 may be implemented by distributed processing with multiple information processors. The information processor may also carry out processing according to a program downloaded from a cloud server (not shown). Fig. 2 merely shows an example of the configuration and does not include the rest of the configuration. The entirety of the configuration illustrated in Fig. 2 is not necessarily essential.

The receiving unit 201 receives payments of prescribed amounts from the client 10 over a prescribed time period. Assuming that the cost required for preparation of the iPS cells is 5,000,000 yen, then payments are accepted in a plan of, for example, reserve funding in an amount of 20,000 yen per month over 250 months, for utilization of the iPS cells. The receiving unit 201 may have a design which carries out a withdrawal procedure from an account of the client 10, or it may have a design in which the results of a bank transfer procedure are accepted.

When the accumulation of payments by the client 10 that have been received by the receiving unit 201 satisfies the first condition, the preparation request transmitter 202 transmits a preparation request for iPS cells of the client 10 to the iPS management server 300. When the first condition is satisfied, this means that the accumulated amount of the reserve fund is a prescribed amount, or that the period of premium payments has reached the prescribed period. If the cost required for preparation of the iPS cells is assumed to be 5,000,000 yen, then the first condition may be an accumulated amount of the reserve fund which is half that amount, or 2,500,000 yen. In other words, the insurance management server 200 transmits a request for preparation of the iPS cells to the iPS management server 300 in advance, at a stage where the cost required for preparation of the iPS cells has not yet fully accumulated. Incidentally, in the example described above, the first condition is when the accumulated payments reach half of the cost required for preparation of the iPS cells, but there is no limitation to this. If the second condition is when the cost required for preparation of the iPS cells has fully accumulated, then the first condition may be set as the condition of any smaller amount or shorter period than the second condition.

Incidentally, the reason for the procedure in which the preparation request for iPS cells is transmitted to the iPS management server 300 when the first condition is satisfied, is as follows. Specifically, this is because in some cases, the potential for use of the iPS cells will vary depending on the inspection results for the iPS cells or for the culture solution used for preparation of the iPS cells, such as the results of preparing the iPS cells, inspecting the genome sequence of the prepared iPS cells and conducting a cell test (test of screening for susceptibility to disease using cells) using a pathology screening model with the prepared iPS cells. For example, for a client with a high potential for use of the iPS cells (that is, a client judged to be susceptible to a disease based on the inspection results of the iPS cells), because of the high potential for use of the iPS cells, it is preferred to use the iPS cells earlier than normal by increasing the amount of reserve funding to shorten the funding period. In other words, even though the reserve funding is for collection of the cost for preparation of iPS cells, the iPS cells are prepared in advance at a stage before the entire cost of preparation has accumulated. The remaining amount of funding is necessary at the time when the prepared iPS cells are actually used, but at this point the monthly amount or funding period for the remaining reserve funding can be modified based on the inspection results for the prepared iPS cells or the culture solution used for preparation of the iPS cells. With this type of processing, it is possible to promote earlier funding for clients that have a high possibility of use of the iPS cells.

Incidentally, for clients that have similar genome sequences for their iPS cells it is possible to use their iPS cells in common, as explained below for the second embodiment. Consequently, when the iPS cells are prepared in advance at a stage where the entire cost of preparing the iPS cells has not yet accumulated and it is possible to provide the prepared iPS cells to another client, then the subsequent reserve funding may be shared (for example, split) between the clients to reduce the amount or to shorten the funding period required for funding of each client. The details in this regard are explained below for the second embodiment.

When the accumulation of payments received by the receiving unit 201 satisfies the second condition which is a condition of a larger amount or a longer period than the first condition, the usage request transmitter 203 transmits a usage request for the iPS cells of the client 10 to the iPS management server 300.

The second condition may be an amount corresponding to the cost required for preparation of the iPS cells, as mentioned above. With such a configuration, the iPS cells are utilized at a stage where payment of the cost required for preparation of the iPS cells has been ensured.

The first condition and second condition may be varied dynamically according to personal information of the client. For example, the first condition for initiating preparation of the iPS cells may be the condition that the funding amount has reached 20% of the estimated funding amount, if the client is healthy, but if a member of the family of the client has a disease, then it may be the condition that the funding amount has reached 80% of the estimated funding amount, or conversely, the condition that the funding amount has reached 5% of the estimated funding amount. Incidentally, the personal information of the client may include one or more from among the gender, race, living region, blood group, lifestyle habits, medical history, genotype and age of the client, and the medical history of the family of the client. The medical history may also include records from a frequented hospital or pharmacy. For example, an application for preparation of iPS cells is submitted from the client terminal 100 to the insurance management server 200. Reserve funding is carried out according to the application for preparation. The application for preparation of iPS cells includes inquiry information such as the gender, race, living region, blood group, lifestyle habits, medical history, genotype and age of the client 10, and the medical history of the family of the client, for example.

The insurance management server 200 transmits the funding amount or funding period for allowing use to the client terminal 100, based on the inquiry information of the client 10. For example, clients 10 may be classified into three categories based on the inquiry information. The first category is a category assigned if the client 10 currently suffers from a disease. The second category is a category assigned if the client has a medical history or the client's family has an inherited medical history. The third category is a category assigned when the client is in a healthy state that does not fall within the first category or second category. Of these three categories, the category with the highest potential for use of the iPS cells is the first category and the category with the next highest potential for use of the iPS cells is the second category, while the third category is the category with the lowest potential for use of the iPS cells. For a client 10 belonging to the first category, since the potential for use of the iPS cells is high, a higher funding amount per month or a shorter funding period is necessary in order to reach the estimated funding amount earlier, than for clients belonging to the other categories. For a client 10 belonging to the second category, the potential for use of the iPS cells is lower than for a client 10 belonging to the first category, and therefore a lower funding amount per month or a longer funding period may be used than for a client belonging to the first category. Similarly, for a client 10 belonging to the third category, a lower funding amount per month or a longer funding period may be used than for a client belonging to the second category. Thus, the insurance management server 200 determines the funding amount or funding period for allowing use by the client 10, based on the inquiry information of the client 10. Incidentally, a certain range (scope) may be set as the determined funding amount or period. The insurance management server 200 transmits the determined range to the client terminal 100.

At the client terminal 100 that has received information relating to the funding amount or period for allowing use, a specific funding amount or period is determined according to instructions from the client 10, and the determined specific funding amount or period is transmitted to the insurance management server 200. At the insurance management server 200, the first condition and second condition may be set according to the specific funding amount or period that has been transmitted as described above.

The first condition and second condition may be different depending on the inspection results of the somatic cells harvested from the client 10. For example, when a preparation request for iPS cells has been made by the client 10, the iPS management server 300 schedules harvesting of somatic cells at the collecting agency 40 at a prescribed timing (for example, a timing in consideration of a window period). The somatic cells of the client 10 are harvested at the collecting agency 40 at the scheduled timing. The harvested somatic cells are inspected at the inspection facility 70, and the inspection results are transmitted to the insurance management server 200. The insurance management server 200 acquires the inspection results and changes the first condition and second condition for allowing use. As explained above in regard to the inquiry information, classification may be made from clients with high potential to clients with low potential for use of the iPS cells, depending on the inspection results. The client terminal 100 is notified of the range of the funding amount that may be set in the classified category.

As mentioned above, the first notification unit 204 notifies the client terminal 100 of the variable conditions, based on the inspection results of the somatic cells.

The first editing unit 205 changes either or both the first condition and second condition, based on instructions from the client terminal 100. For example, when it has been assessed that the client has a high potential for use of the iPS cells, based on the inspection results of the somatic cells, a variable condition with a higher funding amount than normal is transmitted to the client terminal 100. In addition, the client terminal 100 accepts the inputted specific funding amount from the client 10, within the transmitted range for the funding amount, and transmits the specific funding amount to the insurance management server 200. The first editing unit 205 may change either or both the first condition and second condition according to the specific funding amount that has been transmitted. For example, it may create an arrangement in which a higher funding amount is set for the first condition and second condition, allowing the reserve funding to be completed earlier.

The second condition may also be made to differ depending on the inspection results of the prepared iPS cells of the client 10. As mentioned above, the iPS cells of the client 10 are prepared when the first condition has been satisfied. The prepared iPS cells are inspected at the inspection facility 70, and the inspection results are transmitted to the insurance management server 200. The insurance management server 200 acquires the inspection results and changes the second condition for potential use. As explained above in regard to the inquiry information and use of somatic cells, classification may be made from clients with high potential to clients with low potential for use of the iPS cells, depending on the inspection results. The client terminal 100 is notified of the range of the funding amount that may be set in the classified category.

The second notification unit 206 notifies the client terminal 100 of the variable conditions, based on the inspection results of the iPS cells. For example, a setting for whether or not notification is desired may be provided in the insurance management server 200 through the client terminal 100, to allow the client 10 to select whether or not such notification is desired.

The second editing unit 207 changes the second condition based on instructions from the client terminal 100. For example, when it has been assessed that the client has a high potential for use of the iPS cells, based on the inspection results of the iPS cells, a variable condition with a higher funding amount than normal is transmitted to the client terminal 100. In addition, the client terminal 100 accepts the inputted specific funding amount from the client 10, within the transmitted range for the funding amount, and transmits the specific funding amount to the insurance management server 200. The second editing unit 207 changes the second condition according to the specific funding amount that has been transmitted. For example, it may create an arrangement in which a higher funding amount is set for the second condition, allowing the reserve funding to be completed and the prepared iPS cells to be used earlier.

The payment status transmitter 208 transmits to the client terminal 100 the status of payments by the client 10, that has been received by the receiving unit 201. For example, the payment status transmitter 208 transmits the status of payment including: the accumulated funding amount of reserve funds that have been accumulated so far by the client 10, the starting date of reserve funding, the date on which the first condition is scheduled to be satisfied and the date on which the second condition is scheduled to be satisfied (the scheduled date for completion of reserve funding). Alternatively, it may transmit the status of payment including: the starting date of premium payments, the cumulative amount of premiums, the date on which the first condition is scheduled to be satisfied and the date on which the second condition is scheduled to be satisfied. The display screen 102 of the client terminal 100 displays the payment status that has been transmitted. The payment status transmitter 208 may have a mode that transmits the payment status to the client terminal 100 periodically, or it may have a mode that transmits the payment status to the client terminal 100 when requested from the client terminal 100. The client 10 can thereby appropriately confirm the status of their own reserve funding.

The receiving unit 201 can also accept an application from the client 10 to begin preparation.

The first scheduled date transmitter 209 transmits to the iPS management server 300 the date on which the first condition is scheduled to be satisfied and the date on which the second condition is scheduled to be satisfied, as determined according to the application for preparation that has been received by the receiving unit 201. For example, inquiry information is included in the application for preparation, as mentioned above, and the first condition and second condition are determined at the insurance management server 200 based on the inquiry information (and based on instructions from the client terminal 100 as necessary). If the first condition and second condition are determined, both the date on which the first condition is scheduled to be satisfied and the date on which the second condition is scheduled to be satisfied will be determined. The first scheduled date transmitter 209 transmits these scheduled dates to the iPS management server 300. At the iPS management server 300, the scheduled dates are used for management of the steps for preparation of the iPS cells, as described below.

The transfer processing unit 210 carries out processing in which at least a portion of the cumulative payment of client X that has been received by the receiving unit 201 is transferred to the account of client Y, who is a second client different from client X. For example, the insurance management server 200 manages the funded account of client X and the funded account of client Y. Alternatively, the insurance management server 200 may be configured in a manner allowing communication between a server that manages the funded account of client X and a server that manages the funded account of client Y. Client Y may be a client that has applied for preparation of iPS cells, or a potential client that has not yet applied for preparation of iPS cells. As concrete examples, there may be mentioned cases where the reserve fund of client X is passed by inheritance to client Y, or where the reserve fund of client X is transferred to client Y. Also, when a client X who is a parent, for example, has died during the period of reserve funding, the reserve funding up to that point may be transferred to client Y, who is a child or relative. Alternatively, a mode may be employed in which, for example, if a client Y who is a parent is accumulating reserved funds for a client X who is a child, but has suddenly fallen into a condition requiring the use of iPS cells, then the accumulated amount for client X (the child) is transferred (aggregated) to the account of client Y (the parent) for immediate use of the iPS cells. The transfer may be either gratuitous or compensated.

That is, the mode may be one in which the funded account accumulated by client X is sold to another client Y. In an environment where client X cannot freely withdraw their own reserve fund, if the client has become in need of funds, a mode may be employed in which the account containing the reserve fund is sold to another person.

When a request for usage of iPS cells has not been received from the client terminal 100, the refund processing unit 211 carries out processing in which at least a portion of the paid amount is refunded. Also, the usage request transmitter 203 may be configured so that when the second condition has been satisfied and a request for usage of iPS cells has been received from the client terminal 100, it transmits the usage request to the iPS management server 300. In other words, even when the second condition has been satisfied, in some cases the client 10 may not be in a condition to actually use the iPS cells. In such cases, if the client 10 dies, for example, and the iPS cells are not actually used, then at least a portion of the cumulative amount that has been paid is refunded. For refunding, the amount refunded may be minus an amount corresponding to usage fees for the insurance management system. The amount refunded may also have an added amount corresponding to interest on the accumulated amount. The amount refunded may also be minus cell storage fees required up to that point. The refunded account may be the account of a relative of the client 10, for example.

### [Configuration of iPS management server]

The configuration of the iPS management server 300 will now be described. The iPS management server 300 has a receiver 301, a determining unit 302, a recording unit 303, a managing unit 304, an outputter 305, a fourth editing unit 306 and a second scheduled date transmitter 307.

The iPS management server 300 may use an information processor comprising a CPU, RAM and a flash memory or HDD (not shown). A program stored in the flash memory or HDD is temporarily read out into RAM and the CPU executes the program that has been read into RAM, thereby allowing the CPU of the iPS management server 300 to function as the parts of the iPS management server 300 shown in Fig. 2. Incidentally, at least some of the parts of the iPS management server 300 shown in Fig. 2 may be implemented by distributed processing with multiple information processors. The information processor may also carry out processing according to a program downloaded from a cloud server (not shown). Fig. 2 merely shows an example of the configuration and does not include the rest of the configuration. The entirety of the configuration illustrated in Fig. 2 is not necessarily essential. Furthermore, while the insurance management server 200 and iPS management server 300 were described as separate servers, the mode may be one employing a server that includes the functions of both devices.

The receiver 301 receives a preparation request or usage request from the insurance management server 200.

The determining unit 302 determines the starting date for preparation of iPS cells of the client 10, in response to receipt of a preparation request at the receiver 301. For example, the recording unit 303 of the iPS management server 300 records the scheduled date for preparation of the iPS cells of each client. The scheduled date for preparation is changed as appropriate depending on the reserve funding status. As mentioned above, receipt of a preparation request from the insurance management server 200 means that reserve funding of the client 10 has satisfied the first condition, and that preparation of iPS cells is therefore confirmed. Therefore, the determining unit 302 changes the scheduled date for preparation of the iPS cells to the starting date for preparation, and confirms it. For this embodiment, a small device (not shown) allowing preparation in a completely closed, clean environment is used at the iPS cell preparation facility 30. This allows preparation of numerous iPS cells in an automatic manner. The determining unit 302 can determine an appropriate starting date for preparation, depending on the availability of the device.

The recording unit 303 records the starting date for preparation that has been determined at the determining unit 302.

The managing unit 304 carries out unified management of iPS cell banking. For example, the managing unit 304 manages the preparation step for iPS cells to be carried out at the iPS cell preparation facility 30, based on the starting date for preparation recorded in the recording unit 303. The managing unit 304 can also manage the different processing dates, such as the starting date for preparation of the iPS cells, the date of harvesting at the collecting agency 40, the date of transport of somatic cells from the somatic cell depository 50 to the iPS cell preparation facility, the completion date for preparation of the iPS cells, and the date of transport of the prepared iPS cells to the iPS cell depository 60, and can notify the facilities and the depository of the appropriate processing dates.

The outputter 305 outputs permission for usage of the prepared iPS cells of the client 10, in response to receipt of a usage request at the receiver 301. The prepared iPS cells are stored at the iPS cell depository 60. The outputter 305 outputs permission for usage of the iPS cells of the client 10 to a management system or the like (not shown) of the iPS cell depository 60. The permission for usage may also include information regarding the usage facility 80 that is to use the iPS cells, and the transport date on which they are to be transported to the usage facility 80.

Upon receipt of the permission for usage, the iPS cells of the client 10 that are stored at the iPS cell depository 60 are transported to the usage facility 80, and used for regenerative medicine or clinical research.

The receiver 301 may also receive the date on which the first condition is scheduled to be satisfied and the date on which the second condition is scheduled to be satisfied, which are transmitted from the insurance management server 200, and the recording unit 303 may also record the scheduled date for preparation of the iPS cells of the client 10 and the scheduled date for their usage, based on the scheduled date that has been received.

The fourth editing unit 306 allows the scheduled date for preparation and the scheduled date for use that have been recorded in the recording unit 303 to be changed depending on the inspection results of the prepared iPS cells of the client 10 or the medical condition of the client 10. For example, the iPS management server 300 has a configuration allowing the inspection results of the iPS cells of the client 10 obtained from the inspection facility 70 to be acquired, and allowing information regarding the medical condition of the client 10 to be acquired. For example, when it is assessed that the client 10 has a high potential for use of the iPS cells, based on the inspection results of the iPS cells of the client 10 or information regarding the medical condition of the client 10, the scheduled dates are changed so that the scheduled date for preparation and the scheduled date for use are earlier. When a preparation request or usage request is transmitted from the insurance management server 200 depending on subsequent reserve funding after the scheduled dates have been changed, the scheduled date that has been set earlier may be used as the fixed date.

The second scheduled date transmitter 308 can transmit the scheduled date for preparation and the scheduled date for use of the iPS cells of the client 10, recorded in the recording unit 303, to the client terminal 100. The scheduled date for preparation and scheduled date for use of the iPS cells of the client 10, recorded in the recording unit 303, are the scheduled dates that have been transmitted by the first scheduled date transmitter 209 of the insurance management server 200, or they are the scheduled dates that have been changed by the fourth editing unit 306 of the iPS management server 300.

### [Processing sequence]

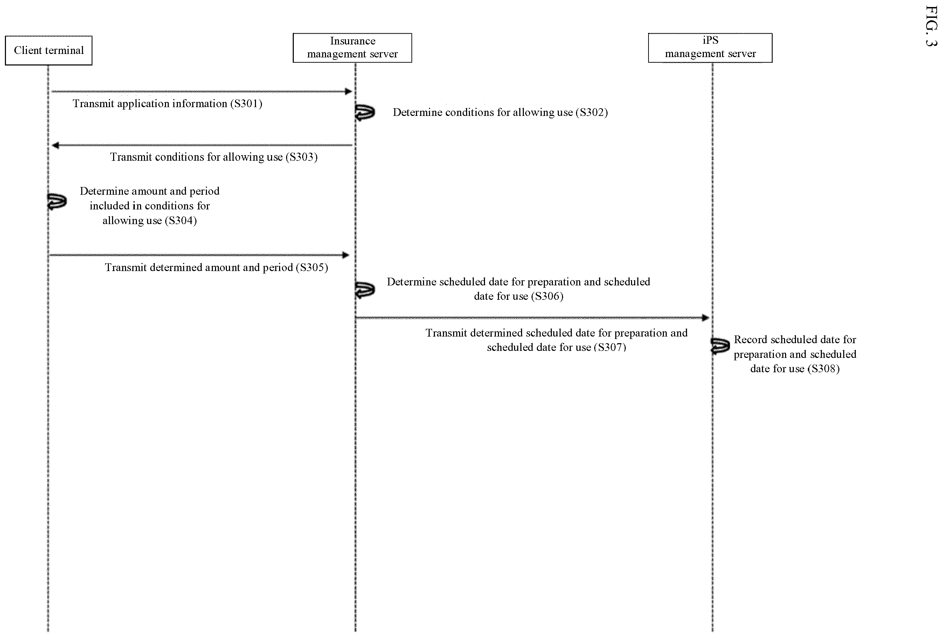

Fig. 3 is a diagram showing an example of a processing sequence for this embodiment. Fig. 3 is a diagram showing an example of a processing sequence where the client 10 submits an application for preparation of iPS cells that may be potentially used in the future.

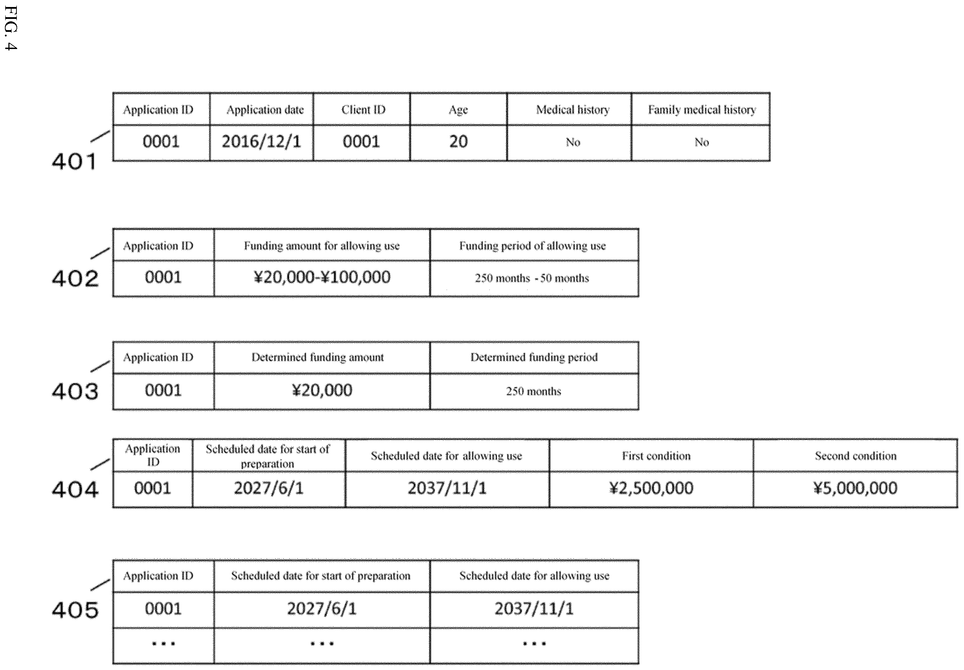

Fig. 4 is a diagram showing an example of concrete data to be used in the processing sequence of Fig. 3.

The client terminal 100 in step S301 transmits application information 401 including an application request for preparation of iPS cells of the client 10. The application information 401 includes an application ID that uniquely identifies the application information, the application date, and a client ID unique to the client 10, as well as inquiry information such as the age of the client 10, and information relating to the medical history of the client 10 and the medical history of the family of the client 10.

In step S302, the insurance management server 200 determines the conditions for allowing use, based on the application information 401. For example, it is assumed that the cost required for preparation of iPS cells is 5,000,000 yen. Referring to the application information 401, since the client 10 has an age of 20 years, no medical history, and no family medical history, the potential for future use of the iPS cells is currently considered to be low. On the other hand, even if the need is currently low, some clients may desire a higher speed of reserve funding to allow prompter use in time of emergency, depending on the client 10. Therefore, the insurance management server 200 determines conditions set with a wider allowable use range for the monthly reserved amount as the funding amount for allowing use, as indicated by conditions 402. The monthly reservable amount in this case is in a range from 20,000 yen to 100,000 yen.

In step S303, the insurance management server 200 transmits the conditions for allowing use, which have been determined in step S302.

In step S304, the client terminal 100 determines the specific funding amount and the funding period, included in the conditions for allowing use that have been transmitted in step S303, based on instructions inputted by the client 10. For this example, the client terminal 100 has determined 20,000 yen as the funding amount and 250 months as the funding period, as indicated by the information 403 in Fig. 4. Incidentally, when either the funding amount or funding period is determined, the other may be automatically determined.

The client terminal 100 in step S305 transmits the funding amount and funding period that have been determined in step S304.

The insurance management server 200 in step S306 determines the scheduled date for preparation and scheduled date for use of the iPS cells, based on the funding amount and funding period that have been transmitted from the client terminal 100. The scheduled date for preparation is the scheduled date for reaching the first condition, and the scheduled date for use is the scheduled date for reaching the second condition. In the example of information 403, the determined funding amount is 20,000 yen and the determined funding period is 250 months. If the cost necessary for preparation of the iPS cells is 5,000,000 yen as mentioned above, the date on which the second condition is satisfied may be the date on which 250 months have passed, as indicated by the information 404. The date on which the second condition is satisfied may also be the date on which 125 months have passed, as half of 250 months.

In step S307, the insurance management server 200 transmits the information 405 including the determined scheduled date for preparation and the scheduled date for use, to the iPS management server 300.

In step S308, the iPS management server 300 records the scheduled date for preparation and the scheduled date for use. The iPS management server 300 manages the scheduled dates for preparation for multiple clients. The date on which the funding amount satisfies the first condition is recorded (reserved) in advance as the date for preparation of the iPS cells of the client. This allows the scheduled date for preparation of the iPS cells to be ensured in advance.

Incidentally, in the example shown in Fig. 3, the explanation assumes a mode in which, when an application for preparation of iPS cells has been requested from the client terminal 100, the conditions for allowing use (for example, the funded amount or period in the range for allowing use) are transmitted to the client terminal 100, with reference to the inquiry information of the client 10, and the amount and period are determined at the client terminal within the range for allowing use; however, there is no limitation to this mode. For example, the configuration may be such that the insurance management server 200 determines the specific funding amount and the funding period and notifies the client terminal 100 regarding them, and the client terminal 100 determines whether or not the specific funding amount and funding period are acceptable based on instructions from the client 10.

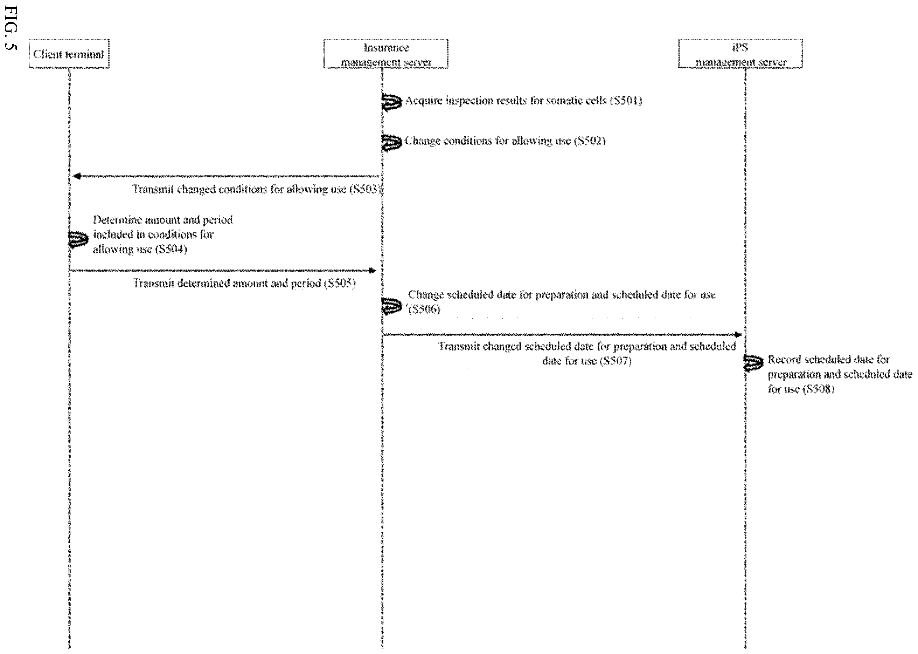

Fig. 5 is a diagram showing an example of a processing sequence that is carried out at a prescribed timing after the processing sequence for an application for preparation as shown in Fig. 3 has been completed. For example, after the application for preparation of iPS cells has been submitted, the iPS management server 300 performs scheduling for harvesting of somatic cells to be carried out at the collecting agency 40 which harvests somatic cells of the client 10. The somatic cells of the client 10 are harvested at the collecting agency 40 according to the schedule, and the harvested somatic cells are inspected at the inspection facility 70, as mentioned above. Fig. 5 shows an example of a processing sequence where the inspection results for somatic cells that have been inspected at the inspection facility 70 as described above are acquired by the insurance management server 200.

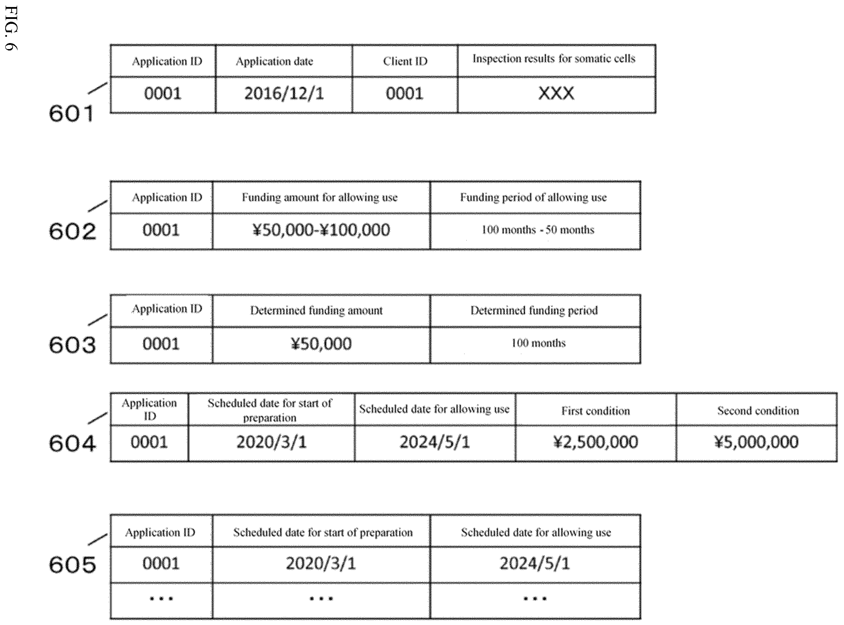

Fig. 6 is a diagram showing an example of concrete data to be used in the processing sequence of Fig. 5.

In step S501, the insurance management server 200 acquires the inspection results 601 for the somatic cells of the client 10. For example, the insurance management server 200 may receive the inspection results from the information processor (not shown) of the inspection facility 70, or it may receive the inspection results from the iPS management server 300 that has received the inspection results of the inspection facility 70, or it may read off the inspection results obtained through paper medium, a recording medium, or the like.

In step S502, the insurance management server 200 changes the conditions for allowing use. For example, when the inspection results for the somatic cells are inspection results indicating a high potential for use of the iPS cells, the funding amount for allowing use is set to be higher than normal and the funding period for allowing use is set to be shorter than normal, so that the iPS cells can be used earlier. The conditions 602 represent an example in which the minimum amount that may be accumulated per month is set to be higher than conditions 402.

In step S503, the insurance management server 200 transmits the changed conditions for allowing use to the client terminal 100.

In step S504, the client terminal 100 determines the funding amount and the funding period, included in the conditions for allowing use that have been transmitted based on instructions inputted by the client 10. For example, the funding amount and funding period are determined so that they are included in the information 603.

In step S505, the client terminal 100 transmits the information 603 including the determined funding amount and funding period, to the insurance management server 200.

In step S506, the insurance management server 200 changes the scheduled date for preparation and scheduled date for use, based on the funding amount and funding period that have been transmitted from the client terminal 100. For example, the scheduled date for preparation and the scheduled date for use are changed to be earlier than normal, as indicated by the information 604.

In step S507, the insurance management server 200 transmits the information 605 including the changed scheduled date for preparation and the scheduled date for use, to the iPS management server 300.

In step S508, the iPS management server 300 records the scheduled date for preparation and the scheduled date for use, that have been transmitted.

The processing shown in Fig. 5 may be carried out immediately after the processing related to the application for preparation shown in Fig. 3, or it may be carried out after elapse of a prescribed time period. The reserve funding may therefore be initiated immediately, in which case the scheduled date for preparation and the scheduled date for use may be determined in consideration of the already accumulated amount or the period.

After the processing shown in Fig. 5, the client 10 continues to accumulate the set reserve funds until the first condition is satisfied.

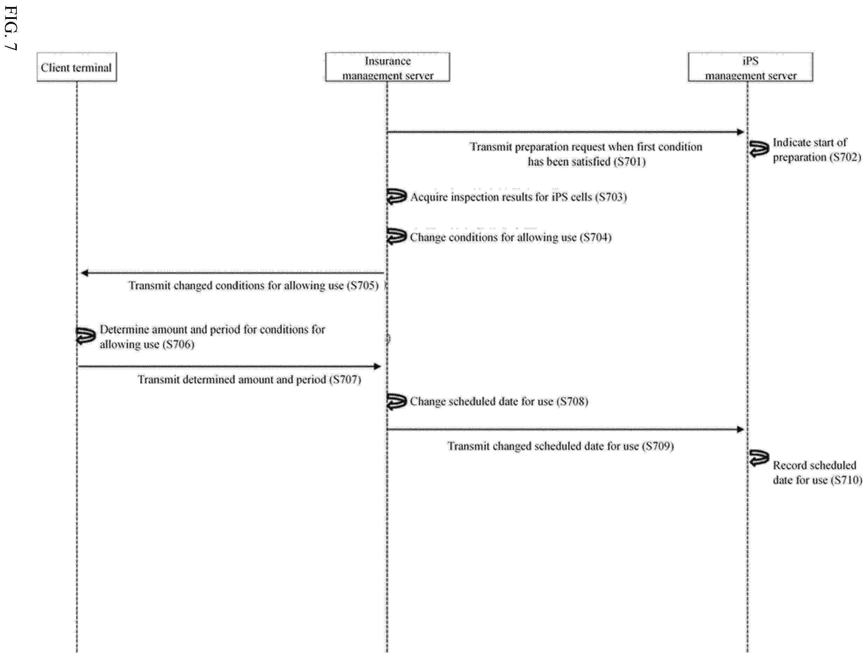

Fig. 7 is a diagram showing an example of a processing sequence where reserve funding is carried out by the client 10, and after the first condition has been satisfied.

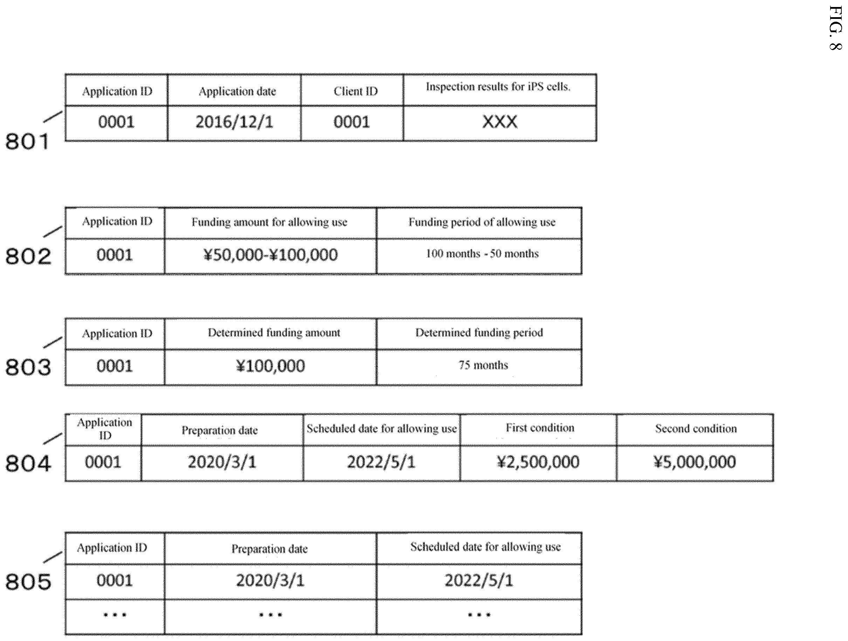

Fig. 8 is a diagram showing an example of concrete data to be used in the processing sequence of Fig. 7.

In step S701, when it has been assessed that the first condition has been satisfied, the insurance management server 200 transmits a preparation request for iPS cells of the client 10 to the iPS management server 300 when, for example, the funding amount has reached half of the cost required for preparation of the iPS cells, as above.

In step S702, the iPS management server 300 outputs instructions for preparation of the iPS cells. For example, the iPS management server 300 performs scheduling for transport of the somatic cells stored in the somatic cell depository 50 to the iPS cell preparation facility 30, as described above. The somatic cells that have been transported to the iPS cell preparation facility 30 according to the schedule are transported to a prescribed preparation device and iPS cells are prepared, according to instructions from the iPS management server 300. The iPS cells prepared in this manner are stored at an iPS cell depository 60, for example. The iPS cells are also inspected at an inspection facility 70.

In step S703, the insurance management server 200 acquires the inspection results 801 for the iPS cells. For example, the insurance management server 200 may receive the inspection results from the information processor (not shown) of the inspection facility 70, or it may receive the inspection results from the iPS management server 300 that has received the inspection results of the inspection facility 70, or it may read off the inspection results obtained through paper medium, a recording medium, or the like.

In step S704, the insurance management server 200 changes the conditions for allowing use. For example, when the inspection results for the iPS cells are inspection results indicating a high potential for use of the iPS cells, the funding amount for allowing use is set to be higher than normal and the funding period for allowing use is set to be shorter than normal, so that the iPS cells can be used earlier. The conditions 802 represent an example in which the minimum amount that may be accumulated per month is set to be higher than conditions 402.

In step S705, the insurance management server 200 transmits the changed conditions for allowing use to the client terminal 100.

In step S706, the client terminal 100 determines the funding amount and the funding period, included in the conditions for allowing use that have been transmitted based on instructions inputted by the client 10. For example, the funding amount and funding period are determined so that they are included in the information 803.

In step S707, the client terminal 100 transmits the information 803 including the determined funding amount and funding period, to the insurance management server 200.

In step S708, the insurance management server 200 changes the scheduled date for use, based on the funding amount and funding period that have been transmitted from the client terminal 100. For example, the scheduled date for use are changed to be earlier than normal, as indicated by the information 804.

In step S709, the insurance management server 200 transmits the information 805 including the changed scheduled date for use, to the iPS management server 300.

In step S710, the iPS management server 300 records the scheduled date for use, that has been transmitted.

After the processing shown in Fig. 7, the client 10 continues to accumulate the set reserve funds until the second condition is satisfied.

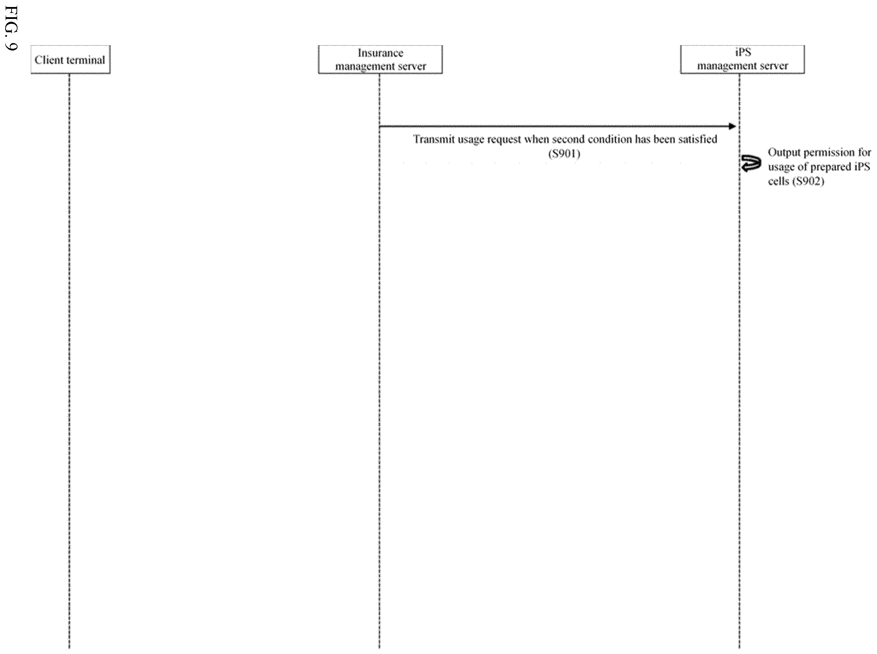

Fig. 9 is a diagram showing an example of a processing sequence after the processing shown in Fig. 7, where reserve funding is carried out by the client 10 and after the second condition has been satisfied.

In step S901, when it has been assessed that the second condition has been satisfied, the insurance management server 200 transmits a usage request for previously prepared iPS cells of the client 10 to the iPS management server 300 when, for example, the funding amount has reached the cost required for preparation of the iPS cells, as above.

In step S902, the iPS management server 300 outputs permission for usage of the prepared iPS cells of the client 10. For example, the iPS management server 300 performs scheduling for transport of the iPS cells stored in the iPS cell depository 60 to the usage facility 80, as described above. The iPS cells that have been transported to the usage facility 80 according to the schedule are used at the usage facility 80, for regenerative medicine or clinical research.

As explained above, according to this embodiment, in a mode where usage of iPS cells is permitted when the second condition is satisfied, the preparation of the iPS cells is initiated when the first condition, of a smaller amount or a shorter period than the second condition, is satisfied. This can guarantee collection of the cost required for preparation of the iPS cells, when the iPS cells are to be used. Also, by preparing the iPS cells in advance even if the cost required for preparation of the iPS cells has not been accumulated, it is possible to provide a flexible insurance system that is adaptable to different inspection results for the prepared iPS cells. For example, the insurance management server 200 can change the second condition according to the inspection results for the prepared iPS cells. Therefore, an increase in the speed of reserve funding may be proposed for a client with a high potential for use of iPS cells for regenerative medicine or the like as a result of inspection of the iPS cells. The insurance management server 200 can also change the first condition and second condition depending on the inspection results of the somatic cells that are used to prepare the iPS cells. Therefore, an increase in the speed of reserve funding may be proposed for a client with a high potential for use of iPS cells as a result of inspection of the somatic cells. In addition, the nature of the changed reserve funding amount range or period may be indicated depending on the inquiry information of the client, and in response to the indication, the client may give instructions regarding their own desired amount within the indicated range.

According to this embodiment, therefore, various modes of reserve funding may be carried out and the speed of reserve funding may be changed, for various situations up until preparation of the iPS cells is desired and the iPS cells are actually used.

### [Second embodiment]

The first embodiment was explained as a mode in which the client 10 carries out reserve funding for use of their own iPS cells. Moreover, the example described was of a mode in which preparation of the iPS cells is initiated when the cumulative payments have satisfied the first condition and use of the prepared iPS cells is permitted when the cumulative payments have satisfied the second condition. However, if clients 10 have similar genomic information, one of them may utilize iPS cells of the other, that are being prepared or have already been prepared. Therefore, clients 10 with similar genomic information may cooperate for reserve funding. Alternatively, the mode may be such as to allow cooperation between clients, whereby a client X who wishes to reserve funds after a client Y that has previously been reserving funds, pays the difference between them. For example, a mode may be employed in which client X, who has genomic information similar to the genomic information of client Y (who has already completed preparation of the iPS cells and is in a status permitting their usage), and starts reserve funding afterwards, pays their own reserve funds for client Y who has already completed preparation and is in a status permitting usage, so that an amount corresponding to the usage fee is paid to client Y.

### [Block diagram]

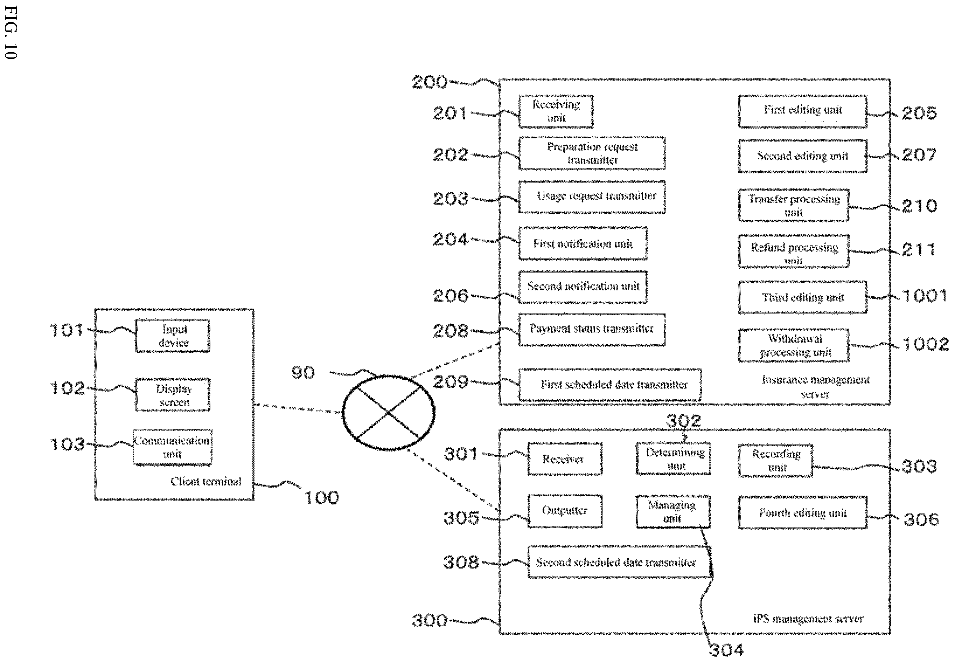

Fig. 10 is a block diagram showing an example of the configurations of a client terminal 100, insurance management server 200 and iPS management server 300. In the block diagram of Fig. 10, an example is shown wherein a third editing unit 1001 and a withdrawal processing unit 1002 have been added to the insurance management server 200 in the block diagram of Fig. 2. The configuration other than the third editing unit 1001 and withdrawal processing unit 1002 are the same as explained for the first embodiment, and will not be explained again here.

Based on the inspection results for the cells (including somatic cells, iPS cells, blood used for harvesting of somatic cells and culture solution used for preparation of the iPS cells) of the first client X, and on the inspection results for the prepared iPS cells of the third client Y that is different from the first client X, the third editing unit 1001 changes either or both the first condition and second condition for either or both the first client X and the third client Y.

This will be explained with the assumption that the progress of preparing the iPS cells of client X is slower than or approximately the same rate as for those of client Y. In this case, various modes may be imagined, such as a mode in which information obtained as a result of inspection of the somatic cells of client X is compared with information obtained as a result of inspection of the somatic cells of client Y, a mode in which information obtained as a result of inspection of the somatic cells of client X is compared with information obtained as a result of inspection of the iPS cells of client Y, and a mode in which information obtained as a result of inspection of the iPS cells of client X is compared with information obtained as a result of inspection of the iPS cells of client Y.

For example, when prepared iPS cells of client Y already exist, client Y may utilize their own iPS cells when the second condition can be reached. On the other hand, client X who has not satisfied the first condition has a status in which their own iPS cells have not yet been prepared. When their genomic information is identical or similar, and client X is able to utilize the iPS cells of client Y, both clients may carry out reserve funding in a cooperative manner. Therefore, the third editing unit 1001 can change the first condition and second condition with reference to the previously accumulated amount and other conditions. For example, the second condition is changed for client X, treating the first condition as already having been satisfied. For example, the funding amount may be set higher than normal, and the funding period may be set shorter than normal. Also, as the second condition for client Y, the funding amount may be set to be lower than normal and the funding period may be set to be shorter than normal.

Incidentally, this example of changing the conditions is merely an example and is not intended to be limitative. The insurance management server 200 may transmit the conditions to separate terminals for client X and client Y, and the conditions set in response to the content of the replies. For example, client Y may allow use of their own prepared iPS cells by client X, either with compensation or gratuitously. In this case, the third editing unit 1001 may change the conditions for client X so that the first condition and second condition of client X have been satisfied. Also, even if both clients X and Y have not satisfied the first condition, i.e. preparation of the iPS cells has not been initiated, if client Y, for example, had been registered first in the system, then the reserve funding conditions for client X and client Y may be set preferentially for client Y.

When the first client X can utilize the prepared iPS cells of a third client Y, and the third client Y has satisfied the second condition, then the withdrawal processing unit 1002 carries out processing in which at least a portion of the payment of the first client X is withdrawn to the account of the third client Y. The status of client Y is such that they have already satisfied the second condition and can utilize their own prepared iPS cells. At this time, when client X who has similar genomic information utilizes the iPS cells of client Y, client Y has already completed reserve funding. Therefore, an amount of at least a portion of the reserve funding of client X is withdrawn into the account of client Y. That is, an amount corresponding to the usage fee can be paid to client Y. In this case as well, by appropriately changing the second condition, various modes may be employed, such as setting a higher usage fee or setting a lower usage fee for client X to client Y. The account of client Y may be any account designated by client Y.

### [Processing sequence]

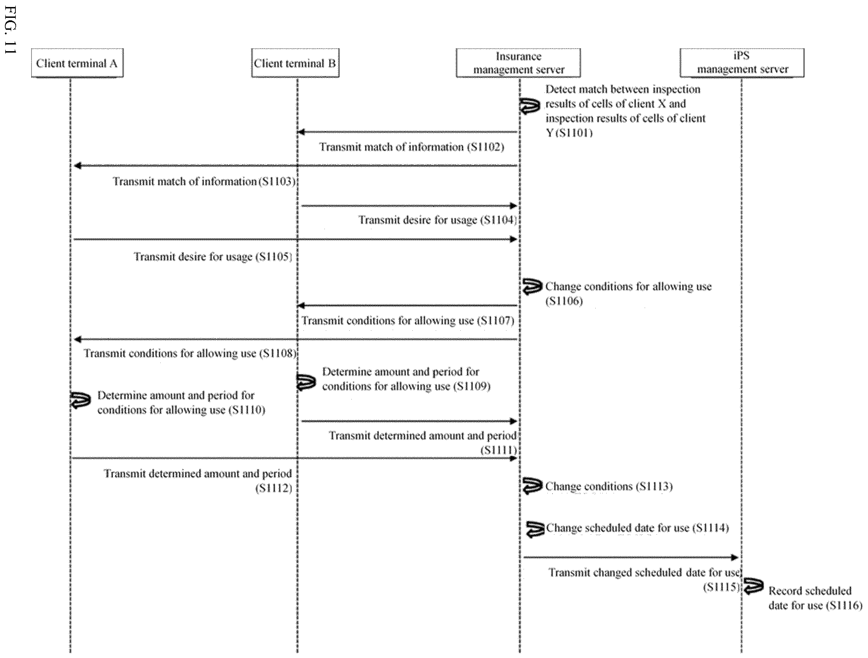

Fig. 11 is a diagram showing an example of a processing sequence for this embodiment. Fig. 11 is a diagram showing an example of a processing sequence in which matching has been found between the inspection results of cells (including somatic cells, iPS cells, blood used for harvesting of the somatic cells or culture solution used for preparation of the iPS cells) of client X and client Y, at a prescribed timing.

In step S1101, the insurance management server 200 detects a match between information obtained as a result of inspection of the cells of client X and information obtained as a result of inspection of the cells of client Y. For example, the information obtained as a result of inspection at the inspection facility 70 may be acquired by the insurance management server 200, and the acquired information may be compared at the insurance management server 200 to detect a match. Alternatively, the mode may be such that at another facility such as the inspection facility 70, assessment is made as to whether or not the information obtained as a result of inspection matches, and the result is acquired by the insurance management server 200.

In step S1102 and step S1103, the insurance management server 200 transmits matching information to the client terminal A of client X and the client terminal B of client Y.

In step S1104 and step S1105, information from both the client terminal A and the client terminal B indicating the desire for usage is transmitted to the insurance management server 200. For this embodiment, incidentally, the example explained was of a mode in which use is permitted by agreement between both client X and client Y. However, there is no limitation to this example. Even when agreement cannot be obtained, as when client Y has already died, for example, the mode may be one of usage without agreement under prescribed conditions.

In step S1106, the insurance management server 200 changes the conditions for allowing use. That is, either or both the first condition and second condition of client X and client Y are changed.

In step S1107 and step S1108, the insurance management server 200 transmits the conditions for allowing use to the client terminal A and client terminal B. The conditions for allowing use may differ between client X and client Y.

In step S1109 and step S1110, the client terminal A and client terminal B determine the amount and period of the conditions for allowing use, and in step S1111 and step S1112, information including the determined amount and period is transmitted to the insurance management server 200.

In step S1113, the insurance management server 200 changes the conditions based on the transmitted information.

In step S1114, the insurance management server 200 changes the scheduled date for use based on the changed conditions.

In step S1115, the insurance management server 200 transmits the changed scheduled date for use, to the iPS management server 300.

In step S1116, the iPS management server 300 records the scheduled date for use, that has been transmitted.

Incidentally, exchange of information between client terminals A and B is carried out separately, and it may be carried out in a different order from the order described above. The other processing may be processing similar to the first embodiment, for the other aspects of processing such as when a usage request is transmitted from the insurance management server 200 to the iPS management server 300 when the accumulation of payments has satisfied the second condition, after the second condition has been updated.

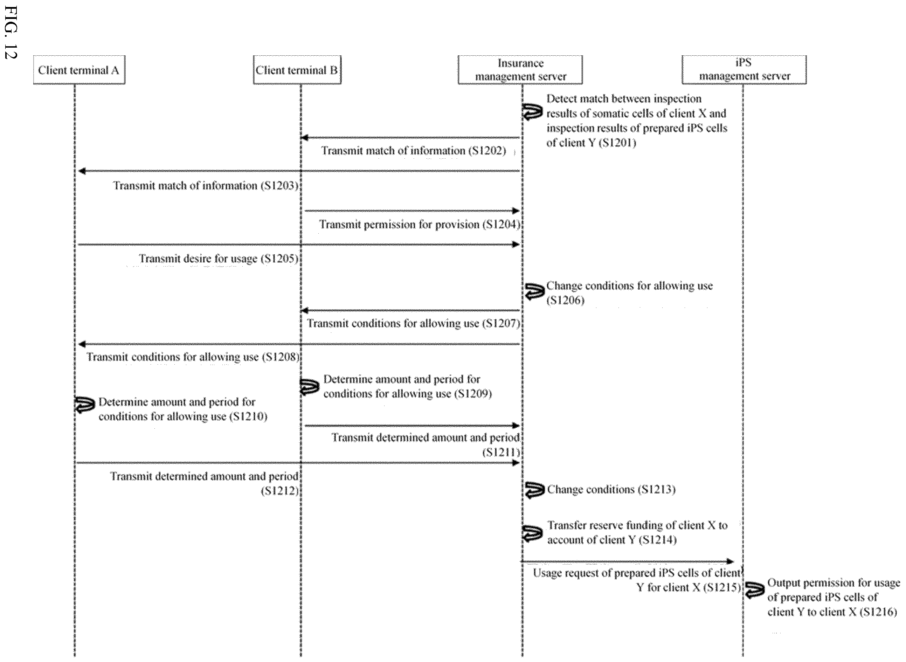

Fig. 12 is a diagram showing an example of a processing sequence for this embodiment. Fig. 12 is a diagram showing an example of a processing sequence in which matching has been found between the inspection results of somatic cells of client X and the inspection results of prepared iPS cells of client Y, at a prescribed timing.

In step S1201, the insurance management server 200 detects a match between the inspection results of somatic cells of client X and the inspection results of iPS cells of client Y. For example, the inspection results at the inspection facility 70 may be acquired by the insurance management server 200, and the acquired results may be compared at the insurance management server 200 to detect a match. Alternatively, the mode may be such that at another facility such as the inspection facility 70, assessment is made as to whether or not the inspection results match, and the result is acquired by the insurance management server 200.

In step S1202 and step S1203, the insurance management server 200 transmits matching information to the client terminal A of client X and the client terminal B of client Y.

In step S1204, based on instructions by client Y permitting their own prepared iPS cells to be provided to client X, the client terminal B of client Y transmits to the insurance management server 200 information permitting the provision.

In step S1205, the client terminal A transmits to the insurance management server 200 the information that usage is desired.

In step S1206, the insurance management server 200 changes the conditions for allowing use. For example, it changes the second condition of client X. The amount that is changed in this case is essentially an amount including the amount to be transferred to the account of client Y.

In step S1207 and step S1208, the insurance management server 200 transmits the conditions for allowing use to the client terminal A and client terminal B. Incidentally, the conditions for allowing use for client Y may be conditions for permitting provision of their own iPS cells.

In step S1209 and step S1210, the client terminal A and client terminal B determine the amount and period of the conditions for allowing use, and in step S1211 and step S1212, information including the determined amount and period is transmitted to the insurance management server 200.

In step S1213, the insurance management server 200 changes the conditions based on the transmitted information.

In step S1214, the insurance management server 200 carries out processing whereby at least a portion of the reserved funds of client X is transferred to the account of client Y. The processing for transfer may be carried out in synchrony with the timing for reserve funding, or it may be carried out at a different timing.

In step S1215, when the second condition has been satisfied, the insurance management server 200 transmits a usage request for prepared iPS cells of client Y on behalf of client X, to the iPS management server 300.

In step S1216, the iPS management server 300 outputs permission for usage of the prepared iPS cells of client Y by client X.

Incidentally, for the processing shown in Fig. 12, the example explained was of a mode in which the insurance management server 200 transmits to each client terminal the information that client X is able to use the prepared iPS cells of client Y, but this is not limitative. For example, a list of client Y stating the intention to freely provide their own prepared iPS cells under prescribed conditions (for example, with payment of a prescribed amount as a condition) may be published. The mode may also be one in which client X transmits the desire for use to client Y (or to the insurance management server 200) based on such published information. The method used by client X to learn that the iPS cells of client Y may be used based on the published information, may be any method. For example, the mode may be one in which client X learns that the prepared iPS cells of client Y may be used by client X, based on the inspection results of client X, when the server (not shown) of the inspection facility 70 that has carried out inspection of the iPS cells of client X transmits that fact to the client terminal A of client X. Client X may also learn that the iPS cells of client Y may be used, by oral transmission from a physician, for example. When the conditions for the payment amount, etc, have thus been determined in advance, the processing of Fig. 12 may employ a mode in which the processing from step S1214 onward is continued after step S1205, or it may employ a mode in which the other steps are omitted.

As explained above, for the processing of this embodiment, the processing may be carried out in consideration of the particularity of iPS cells whereby another person's iPS cells may be used when genomic information matches. In other words, cooperative reserve funding between clients having matching genomic information allows the cost required for usage of iPS cells to be lowered compared to individual reserve funding. Moreover, a client in a status of having already completed reserve funding and being able to use the iPS cells may allow another client with similar genomic information to use their own iPS cells, and may receive an amount corresponding to the usage fee.

Incidentally, for this embodiment an example was described in which assessment of whether or not another person's iPS cells may be used was made based on genomic information, but this is not limitative, and the assessment of the ability to use iPS cells may made based on another method. For example, the HLA (Human Leukocyte Antigen) type may be used. Of 15 HLA types, the usability of iPS cells by other persons can be assessed by examining the compatibility of one or more prescribed HLA types. For example, compatibility may be examined using the 3 main HLA types among the 15 HLA types.

### [Other embodiments]

The embodiments described above were explained primarily as examples of preparation and use of iPS cells, but there is no limitation to such cells. The present invention may be applied not only to the preparation and use of iPS cells, but also to the preparation and use of cells derived from iPS cells, as well as various other types of cells, and may be applied for transplant medicine. Examples of cells derived from iPS cells include stem cells, differentiated cells, myocardial cells, hepatocytes, nerve cells and pancreatic cells obtained by induced differentiation of iPS cells, with no limitation to these.

Moreover, the first condition may include several subconditions. For example, when the first condition includes two subconditions, the subconditions may be referred to as first condition A and first condition B. The mode may be one in which preparation of iPS cells is initiated when the first condition A has been satisfied, and upon satisfying the first condition B of a larger amount of accumulation of payments or a longer payment period than the first condition A, differentiation of the iPS cells is induced to prepare differentiated cells. The mode may also be such that use of the prepared differentiated cells is permitted when a second condition of a larger amount of accumulation of payments or a longer payment period than the first condition A has subsequently been satisfied. Appropriate modification may also be made regarding the type of cells among the iPS cells that are to be prepared at the iPS cell preparation facility 30 when the first condition has been satisfied. The modification may be as desired, depending on the mode of use at the usage facility 80, for example.

The embodiments described above serve merely to facilitate understanding of the invention, and are not to be interpreted as restricting the scope of the invention. The different elements comprising the embodiments, and their arrangement, materials, conditions, forms and sizes may be appropriately modified without any limitation to the examples shown. In addition, the configurations of different embodiments may also be partially exchanged or combined.

The program for implementing each of the embodiments of the invention as described above may be stored in a recording medium. By using a recording medium it is possible to install the program in a computer. The recording medium storing the program may be a non-transitory recording medium. The non-transitory recording medium is not particularly restricted, and may be recording medium such as a CD-ROM, for example.

### REFERENCE SIGNS LIST

10: Client, 30: cell preparation facility, 40: collecting agency, 50: somatic cell depository, 60: cell depository, 70: inspection facility, 80: usage facility, 90: network, 100: client terminal, 101: input device, 102: display screen, 103: communication unit, 200: insurance management server, 201: receiving unit, 202: preparation request transmitter, 203: usage request transmitter, 204: first notification unit, 205: first editing unit, 206: second notification unit, 207: second editing unit, 208: payment status transmitter, 209: first scheduled date transmitter, 210: transfer processing unit, 211: refund processing unit, 300: iPS management server (cell management server), 301: receiver, 302: determining unit, 303: recording unit, 304: managing unit, 305: outputter, 306: fourth editing unit, 307: second scheduled date transmitter, 308: second scheduled date transmitter, 1001: third editing unit, 1002: withdrawal processing unit.

## Claims

1. An insurance management system comprising an insurance management server,
the insurance management server having
a receiving unit that receives payment of a prescribed amount over a prescribed time period from a user, including a client or a person associated with the client,
a preparation request transmitter that transmits a preparation request by the client for specific cells to a cell management server that manages preparation of the specific cells, when accumulation of payments by the user received at the receiving unit satisfies a first condition, and
a usage request transmitter that transmits a usage request by the client for the specific cells to the cell management server, when accumulation of payments received at the receiving unit satisfies a second condition which is a condition of a larger amount or a longer period than the first condition.

2. The management system according to claim 1, wherein
the cell management server has
a receiver that receives a preparation request or usage request from the insurance management server,
a determining unit that determines the starting date for preparation of the specific cells of the client in response to receipt of a preparation request at the receiver,
a managing unit that manages preparation of the specific cells of the client on the preparation starting date, and
an outputter that outputs permission for use of the specific cells of the client that have been prepared, in response to receipt of a usage request at the receiver.

3. The management system according to claim 1 or 2, wherein the specific cells include iPS cells or cells derived from iPS cells.

4. The management system according to any one of claims 1 to 3, wherein the first condition and the second condition differ depending on one or more from among the gender, race, living region, blood group, lifestyle habits, medical history, genotype and age of the client, and the medical history of the family of the client.

5. The management system according to any one of claims 1 to 4, wherein the first condition and the second condition differ depending on the inspection results of either or both the somatic cells harvested from the client and blood used for harvesting of the somatic cells.

6. The management system according to claim 5, wherein
the insurance management server further has
a first notification unit that notifies a terminal of the client of the variable conditions, based on the inspection results, and
a first editing unit that changes either or both the first condition and second condition based on instructions from the terminal of the client.

7. The management system according to any one of claims 2 to 6, wherein the second condition differs depending on the inspection results of either or both the specific cells of the client that have been prepared and a culture solution used for preparation of the specific cells.

8. The management system according to claim 7, wherein
the insurance management server further has
a second notification unit that notifies a terminal of the client of the variable conditions, based on inspection results of the specific cells, and
a second editing unit that changes the second condition based on instructions from the terminal of the client.

9. The management system according to claim 8, wherein a setting for whether or not notification by the second notification unit is desired can be set from the terminal of the client.

10. The management system according to any one of claims 1 to 9, wherein the insurance management server further has a payment status transmitter that transmits to the terminal of the user, the payment status of the user which has been received at the receiving unit.

11. The management system according to claim 2, wherein
the receiving unit also receives an application for preparation from the user,
the insurance management server further has a first scheduled date transmitter that transmits to the cell management server the date on which the first condition is scheduled to be satisfied and the date on which the second condition is scheduled to be satisfied, which are determined according to the application for preparation that has been received,
the receiver of the cell management server also receives the scheduled dates that are transmitted, and
the cell management server further has a recording unit that records the scheduled date for preparation and the scheduled date for use of the specific cells of the client, based on the scheduled dates that have been received.

12. The management system according to claim 11, wherein
the cell management server further has a fourth editing unit that changes the scheduled date for preparation and the scheduled date for use that have been recorded at the recording unit, depending on the inspection results of the specific cells of the client that have been prepared, or the medical condition of the client.

13. The management system according to claim 11 or 12, wherein
the cell management server further has a second scheduled date transmitter that transmits to the terminal of the user, the scheduled date for preparation and the scheduled date for use of the specific cells of the client, which have been recorded at the recording unit.

14. The management system according to any one of claims 1 to 13, wherein
the insurance management server further has a transfer processing unit that transfers at least a portion of the accumulated payments of the user, which have been received at the receiving unit, to an account of a second user that is different from the user.

15. The management system according to any one of claims 1 to 14, wherein the usage request transmitter of the insurance management server is configured so that when the second condition is satisfied and a request for usage of the specific cells has been received from the terminal of the user, the usage request is transmitted to the cell management server, and
the insurance management server further has a refund processing unit that carries out processing whereby at least a portion of the paid amount is refunded when a request for usage of the specific cells is not received from the terminal of the user.

16. The management system according to any one of claims 1 to 15, wherein the insurance management server further has a third editing unit that changes either or both the first condition and the second condition of either or both a first client and a third client that is different from the first client, depending on the inspection results of the cells of the first client and the inspection results of prepared specific cells of the third client.

17. The management system according to claim 16, wherein the insurance management server further has a withdrawal processing unit that, in a case where the first client is able to use cells of the third client who is different from the first client, that are being prepared or have been prepared, and the third client has satisfied the second condition, at least a portion of payments relating to the first client is withdrawn into an account associated with the third client.

18. A method for a management system comprising an insurance management server, wherein
the insurance management server carries out
a step of receiving payment of a prescribed amount over a prescribed time period from a user, including a client or a person associated with the client,
a step of transmitting a preparation request by the client for specific cells to a cell management server that manages preparation of the specific cells, when accumulation of payments by the user that have been received satisfies a first condition, and
a step of transmitting a usage request by the client for the specific cells to the cell management server, when accumulation of payments that have been received satisfies a second condition which is a condition of a larger amount or a longer period than the first condition.

19. The method according to claim 18, wherein
the cell management server carries out
a step of receiving a preparation request or usage request from the insurance management server,
a step of determining the starting date for preparation of the specific cells of the client in response to receipt of a preparation request,
a step of managing preparation of the specific cells of the client on the preparation starting date, and
a step of outputting permission for use of the specific cells of the client that have been prepared, in response to receipt of a usage request.
